# EUROPÄISCHE PATENTSCHRIFT

(11) **EP 4 062 134 B1**
(45) Veröffentlichungstag und Bekanntmachung des Hinweises auf die Patenterteilung: **30.08.2023**
(21) Anmeldenummer: 20804227.5
(22) Anmeldetag: 09.11.2020
(51) Int. Cl.: G01G 21/24, G01L 1/22

(54) **MONOLITHISCHES WÄGESYSTEM UND VERFAHREN ZU DESSEN HERSTELLUNG**
MONOLITHIC WEIGHING SYSTEM AND METHOD FOR PRODUCING SAME
SYSTÈME DE PESAGE MONOLITHIQUE ET SON PROCÉDÉ DE FABRICATION

(30) Priorität: 18.11.2019 DE 102019131101
(43) Veröffentlichungstag der Anmeldung: 28.09.2022
(73) Patentinhaber: Sartorius Lab Instruments GmbH & Co. KG, 37079 Göttingen (DE)
(72) Erfinder: BODE, Jonas, 37075 Göttingen (DE); GEISLER, Matthias, 37176 Nörten-Hardenberg (DE)
(74) Vertreter: Novagraaf International SA
(86) Internationale Anmeldenummer: PCT/EP2020/081466
(87) Internationale Veröffentlichungsnummer: WO 2021/099161

(56) Entgegenhaltungen:
- EP-A1- 3 502 633
- DE-A1-102017 218 033
- JP-A- 2018 205 141

## Beschreibung

### Gebiet der Erfindung

Die Erfindung bezieht sich auf ein monolithisches Wägesystem, umfassend eine Mehrzahl von Hebeln, die mittels Dünnstellengelenken miteinander verbunden sind, wobei die Hebel einerseits und die Dünnstellengelenke andererseits aus unterschiedlichen Materialien oder Matereialkombinationen bestehen und die beidseitig an eines der Dünnstellengelenke angrenzenden Hebel ein erstes Material aufweisen und das Dünnstellengelenk ein vom ersten Material verschiedenes, zweites Material aufweist.

Die Erfindung bezieht sich weiter auf ein Verfahren zum Herstellen eines monolithischen Wägesystems, umfassend eine Mehrzahl von Hebeln, die mittels Dünnstellengelenken miteinander verbunden sind, wobei die Hebel einerseits und die Dünnstellengelenke andererseits aus unterschiedlichen Materialien oder Materialkombinationen bestehen und die beidseitig an eines der Dünnstellengelenke angrenzenden Hebel ein erstes Material aufweisen und das Dünnstellengelenk ein vom ersten Material verschiedenes, zweites Material aufweist.

### Stand der Technik

Ein gattungsgemäßes Wägesystem sowie ein Verfahren zu dessen Herstellung sind bekannt aus der EP 3 502 633 A1 bzw. der WO 2019/121350 A1.

Unter dem Begriff des Wägesystems sei hier das Hebelwerk verstanden, welches in Waagen, insbesondere in elektronischen Präzisionswaagen, unabhängig davon ob sie z. B. nach dem Prinzip der elektromagnetischen Kompensation oder auf Basis von Dehnungsmessstreifen arbeiten, die Lastaufnahme einerseits, bspw. eine Waagschale, mit dem eigentlichen Sensor andererseits, bspw. eine elektromagnetische Tauchspulenanordnung, verbindet. Hierzu enthält das Wägesystem eine komplexe Anordnung von Hebeln (einschl. Lenkern) und diese verbindenden Gelenken die einstückig (monolithisch) miteinander verbunden sind. Das typische Verfahren zur Herstellung eines solchen monolithischen Wägesystems, kurz "Monolith", besteht darin, das gesamte System aus einem Metallblock, bspw. Aluminium zu fräsen. Dies ist unter anderem im Hinblick auf die damit verbundenen Materialkosten teuer. Zudem stellt das häufig verwendete Aluminium keineswegs das für alle Funktionsaspekte optimale Material dar - es stellt aber einen im Hinblick auf die notwendigen funktionalen Eigenschaften der unterschiedlichen Bestandteile des Monolithen und auf seine Bearbeitbarkeit einen guten Kompromiss dar. Bei der Wahl anderer Materialien fällt der Kompromiss häufig ungünstiger aus. Ein monolithisches Wägesystem aus kostengünstigem Edelstahl ließe sich zwar gut bearbeiten und wiese auch im Bereich der Hebel die notwendige Steifigkeit auf; Gelenken, insbesondere Dünnstellengelenken, aus Edelstahl fehlt es jedoch regelmäßig an der notwendigen Elastizität und Zugfestigkeit. Die Wahl bspw. von Inconel^{®} hingegen wäre hinsichtlich der Gelenkeigenschaften günstiger, und auch die erforderliche Hebelsteifigkeit wäre gegeben; das spröde Inconel lässt sich aber nur sehr schlecht großräumig bearbeiten. Günstig wäre es daher, einen Monolithen aus unterschiedlichen, aber quasi-materialeinheitlich miteinander verbundenen Materialien zu schaffen.

Dieser Ansatz wird in der oben genannten, gattungsbildenden Druckschrift verfolgt. Diese schlägt vor, einen Wägesystem-Rohling aus für die Hebel-Bereiche optimiertem Material zu fertigen und in den Gelenkbereichen mit Ausnehmungen zu versehen, wobei die Ausnehmungen im Nachgang mit einem für die Gelenkbereiche optimierten Material gefüllt werden. Dieses Material soll, so die genannte Druckschrift, durch Gießen, Umformen oder Einkneten stoffschlüssig und insbesondere im Fall des Einknetens quasi-materialeinheitlich eingefügt werden. Nach der Erfahrung der hiesigen Erfinder ist dieser Ansatz allerdings wenig praxistauglich.

### Aufgabenstellung

Es ist die Aufgabe der vorliegenden Erfindung, ein gattungsgemäßes Wägesystem und ein Verfahren zu dessen Herstellung zur Verfügung zu stellen, welches eine praxistaugliche Umsetzung des Ansatzes einer funktionsbereichsoptimierten Materialwahl bietet.

### Darlegung der Erfindung

Diese Aufgabe wird in Verbindung mit den Merkmalen des Oberbegriffs von Anspruch 1 dadurch gelöst, dass der erfindungsgemäße Monolith geschaffen wird durch
- ein additives Fertigungsverfahren, bei dem unterschiedliche Materialien, einschließlich besagten ersten und zweiten Materials, schichtweise aufgetragen und zu einem einstückigen Wägesystem-Rohling verbunden werden, wobei der Wägesystem-Rohling prospektive Hebel-Bereiche und prospektive Dünnstellengelenk-Bereiche aufweist, sowie
- eine nachfolgende, subtraktive Endbearbeitung des Wägesystem-Rohlings zumindest an den prospektiven Dünnstellengelenk-Bereichen zum Erhalt des Wägesystems.

Das entsprechende Herstellungsverfahren ist in Verbindung mit den Merkmalen des Oberbegriffs von Anspruch 10 gekennzeichnet durch die Schritte:
- Herstellen eines Wägesystem-Rohlings mittels eines additiven Fertigungsverfahrens, bei dem Pulver aus unterschiedlichen Materialien, einschließlich besagten ersten und zweiten Materials, zu dem Wägesystem-Rohling gesintert werden, wobei der Wägesystem-Rohling prospektive Hebel-Bereiche und prospektive Dünnstellengelenk-Bereiche aufweist, sowie
- nachfolgendes, subtraktives Endbearbeiten des Wägesystem-Rohlings zumindest an den prospektiven Dünnstellengelenk-Bereichen zur Fertigstellung des Wägesystems.

Bevorzugte Ausführungsformen sind Gegenstand der abhängigen Ansprüche.

Die Grundidee des erfindungsgemäßen Ansatzes besteht, vereinfacht ausgedrückt, darin, den Rohling eines monolithischen Wägesystems zunächst mittels eines "3D-Druckers" zu "drucken". Für den 3D-Druck (Synonym für additives Fertigungsverfahren) sind dem Fachmann verschiedene Ansätze bekannt, die im Rahmen der vorliegenden Erfindung allesamt Einsatz finden können. Rein beispielhaft seien hier das sog. Coldspray-Verfahren, selektives Laserschweißen, Auftragsschweißen und Pulversintern genannt. Im Rahmen des Pulversinterns haben sich insbesondere Pulverbett-Lasersinterverfahren sowie Pulverdüsen-Lasersinterverfahren als besonders tauglich erwiesen. Der Vorteil solch additiver Fertigungsverfahren besteht darin, dass allein durch richtig synchronisierte Zuführung unterschiedlicher Pulver, insbesondere unterschiedlicher Metallpulver, definierte Bereiche des Wägesystem-Rohlings aus unterschiedlichen Materialien gefertigt werden können. Je nach der Gestaltung der Übergänge beim Pulverwechsel können dabei scharfe Materialgrenzen oder einander durchdringende Übergangsbereiche geschaffen werden. In jedem Fall lassen sich die einzelnen Funktionbereiche des Monolithen aus dem hierfür jeweils funktional optimal gewählten Material fertigen.

Ein weiterer Vorteil der addiven Fertigungsverfahren liegt in der größeren Geometrie-Gestaltungsfreiheit ggü. subtraktiven Verfahren. Insbesondere Hinterschnitte oder Hohlräume, die sich mit subtraktiven Verfahren nicht oder nur schwer erzeugen lassen, lassen sich mittels additiver Verfahren vergleichsweise einfach gestalten.

Nachteilig gegenüber dem üblichen Fräsen ist die bisher noch unzureichende räumliche Präzision additiver Fertigungsverfahren. Die Erfindung sieht daher vor, in einem zweiten Verfahrensschritt eine subtraktive, d. h. Material entfernende Nachbearbeitung vorzunehmen. Dies betrifft insbesondere die prospektiven Dünnstellengelenk-Bereiche des Wägesystem-Rohlings, d. h. diejenigen Bereiche des Wägesystem-Rohlings, aus denen im Rahmen der Endbearbeitung die Dünnstellengelenke des Wägesystems werden. Auch die prospektiven Hebel-Bereiche, d. h. diejenigen Bereiche des Wägesystem-Rohlings, aus denen durch die Endbearbeitung die Hebel des Wägesystems werden, werden typischerweise einer subtraktiven Nachbearbeitung unterworfen. Diese kann sich jedoch häufig auf ein Entgraten oder Polieren beschränken. Bei den prospektiven Dünnstellengelenk-Bereichen erfolgt im Rahmen der subtraktiven Endbearbeitung typischerweise eine substantielle Formänderung.

So ist es bspw. möglich, die prospektiven Hebel-Bereiche aus Edelstahl und die prospektiven Dünnstellengelenk-Bereiche aus einer korrosionsbeständigen Nickelbasislegierung, z.B. Inconel , zu fertigen. Dessen Nachteil des hohen Preises und der schlechten Bearbeitbarkeit wird somit auf kleine Bereiche der Gesamtvorrichtung beschränkt und zudem durch die Funktionsoptimierung überkompensiert. Der Vorteil des geringen Preises und der leichten Nachbearbeitbarkeit von Edelstahl kann hingegen im weit überwiegenden Teil des Monolithen ausgenutzt werden, wo auch seine funktionalen Eigenschaften den gewünschten Anforderungen entsprechen.

Die subtraktive Endbearbeitung kann auf grundsätzlich bekannte Weise, jeweils in Ansehung der Erfordernisse des Einzelfalls, vorgenommen werden. Bspw. kann sie mechanisch, insbesondere durch Fräsen, laseroptisch oder durch Elektroerodieren erfolgen.

Manche Monolith-Geometrien weisen höchst filigrane Dünnstellengelenke auf. Bei der Wahl von spröden Materialien für diese Bereiche, bspw. Inconel , sind diese Bereiche recht empfindlich und insbesondere in einer rauen Fertigungsumgebung bruchgefährdet. Trotz der erfindungsgemäß vorgesehenen subtraktiven Endbearbeitung ist es nicht immer möglich, die prospektiven Dünnstellengelenk-Bereiche derart massiv auszubilden, dass sie während nachfolgender, der Endbearbeitung noch vorangehender Bearbeitungsschritte zuverlässig gegen Bruch geschützt sind. Bei einer besonderen Ausführungsform der Erfindung ist daher vorgesehen, dass einer der prospektiven Dünnstellengelenk-Bereiche (vorzugsweise alle) sowie die beidseitig an ihn angrenzenden prospektiven Hebel-Bereiche zwei äußere Schichten des ersten Materials und eine dazwischenliegende, innere Schicht des zweiten Materials aufweisen und im Rahmen der Endbearbeitung die äußeren Schichten im prospektiven Dünnstellengelenk-Bereich unter wenigstens teilweiser Erhaltung der dortigen inneren Schicht sowie unter wenigstens teilweiser Erhaltung der inneren und äußeren Schichten in den angrenzenden prospektiven Hebel-Bereichen vollständig entfernt werden. Mit anderen Worten wird der Wägesystem-Rohling in einer bereichsübergreifenden Sandwich-Bauweise gedruckt (additiv gefertigt). Das speziell für die Gelenkfunktion optimierte, zweite Material wird dabei als eine innere Schicht eingebracht, die von zwei äußeren Schichten des ersten Materials, welches für die Hebelfunktion optimiert ist, flankiert ist. Dieser äußere Mantel stabilisiert den prospektiven Dünnstellengelenk-Bereich während des gesamten Herstellungs- und Handhabungsprozesses bis zur Endbearbeitung. Erst im Rahmen der Endbearbeitung werden im prospektiven Dünnstellengelenk-Bereich diese äußeren Stabilisierungsschichten abgetragen und zurück bleibt die mechanisch empfindliche aber für die Gelenkfunktion optimierte innere Schicht, die dann im fertige Monolithen dessen Dünnstellengelenk bildet. Sie ragt zugleich tief in die benachbarten Hebel hinein und ist so innerhalb des Monolithen fest in den angrenzenden Strukturen verankert.

Alternativ kann vorgesehen sein, dass die beidseitig an ein Dünnstellengelenk angrenzenden Hebel hauptsächlich aus dem ersten Material bestehen und das Dünnstellengelenk vollständig aus dem zweiten Material besteht, welches in innerhalb der Hebel liegenden Übergangsbereichen graduell in das erste Material übergeht. Bei dieser Ausführungsform wird vorzugsweise bereits der prospektive Dünnstellengelenk-Bereich ausschließlich aus dem für die Gelenkfunktion optimierten, zweiten Material gedruckt. Die Verankerung in den angrenzenden prospektiven Hebel-Bereichen erfolgt durch Ausbildung entsprechender Übergangsbereiche, was bspw. durch ein Überblenden der Zufuhren beider Materialien beim additiven Fertigungsprozess realisiert werden kann. Bei dieser Ausführungsform fällt die subtraktive Nachbearbeitung weniger aufwendig aus. Der prospektive Dünnstellengelenk-Bereich ist jedoch vollkommen ungeschützt, weshalb diese Ausgestaltung nicht für alle Materialien in Frage kommt.

Selbstverständlich ist es möglich unterschiedliche prospektive Dünnstellengelenk-Bereiche des Wägesystem-Rohlings auf unterschiedliche Weisen zu gestalten, sodass innerhalb desselben Monolithen unterschiedliche Dünnstellengelenk-Strukturen realisiert werden können.

Wie bereits weiter oben angedeutet, haben sich unterschiedliche Materialkombinationen besonders bewährt. So kann günstigerweise vorgesehen sein, dass das erste und das zweite Material metallische Materialien sind, wobei das erste Material insbesondere Edelstahl und das zweite Material insbesondere Inconel^{®} ist. Alternativ kann das erste Material insbesondere eine Kupfer-Nickel-Zinn-Legierung und das zweite Material insbesondere eine Kupfer-Beryllium-Legierung sein. Diese Angabe von Materialkombinationen ist rein beispielhaft zu verstehen und soll die Erfindung in keiner Weise einschränken.

So kann bei einer anderen Ausführungsform vorgesehen sein, dass das erste Material eine Keramik, insbesondere Zirkonoxid oder Aluminiumoxid, ist und das zweite Material ein metallisches Material. Speziell die vorgenannten Keramiken haben sich für additive Fertigungsverfahren als höchst geeignet erwiesen. Auch hat sich gezeigt, dass sie im Rahmen solch additiver Fertigungsverfahren mit metallischen Materialien sehr feste, quasi-materialeinheitliche Verbindungen durch ineinander übergehende Mischbereiche eingehen können. Zudem weisen sie die für die Hebel des Monolithen erforderliche Steifigkeit auf und sind äußerst kostengünstig. Für die Gelenke sind sie jedoch vollständig ungeeignet, weshalb hier als zweites Material bevorzugt Metall, insbesondere Inconel^{®} oder eine Kupfer-Beryllium-Legierung, Einsatz findet.

Ein weiterer Vorteil keramischer Materialien liegt in ihrer elektrisch isolierenden Eigenschaft. So kann bei einer Weiterbildung der oben beschriebenen Ausführungsform, bei der das erste und das zweite Material jeweils metallische Materialien sind, vorgesehen sein, dass die beidseitig an eines der Dünnstellengelenke angrenzenden Hebel eine sie durchziehende, mit dem zweiten Material des Dünnstellengelenks materialeinheitlich verbundene, von dem ersten Material umgebene, elektrische Leiterbahn aus dem zweiten Material enthalten. Auf diese Weise kann eine die Hebel und die dazwischen liegende Dünnstelle durchlaufende Leiterbahn realisiert werden. Diese kann zur Leitung von Mess- oder Steuersignalen oder auch zur elektrischen Energieversorgung genutzt werden. Zumindest im Bereich der Hebel ist sie durch den sie umgebenden Mantel aus Keramik gegen ihre Umgebung isoliert.

Weitere Einzelheiten und Vorteile der Erfindung ergeben sich aus der nachfolgenden speziellen Beschreibung und den Zeichnungen.

### Kurzbeschreibung der Zeichnungen

Es zeigen:
- Figur 1: eine ausschnittsweise Schnittdarstellung eines Wägesystem-Rohlings gemäß einer ersten Ausführungsform der Erfindung,
- Figur 2: eine analog ausschnittsweise Schnittdarstellung eines aus dem Wägesystem-Rohling von Figur 1 resultierenden Wägesystems nach mechanischer Endbearbeitung (Teilfigur a) bzw. laseroptischer Endbearbeitung (Teilfigur b),
- Figur 3: eine ausschnittsweise Schnittdarstellung eines Wägesystem-Rohlings gemäß einer zweiten Ausführungsform der Erfindung,
- Figur 4: eine analog ausschnittsweise Schnittdarstellung eines aus dem Wägesystem-Rohling von Figur 3 resultierenden Wägesystems nach mechanischer Endbearbeitung (Teilfigur a) bzw. laseroptischer Endbearbeitung (Teilfigur b)
- Figur 5: eine ausschnittsweise Schnittdarstellung eines Wägesystem-Rohlings gemäß einer dritten Ausführungsform der Erfindung,
- Figur 6: eine perspektivische Ansicht eines Wägesystems gemäß einer bevorzugten Weiterbildung der Erfindung sowie
- Figur 7: eine Schnittdarstellung des Wägesystems von Figur 6.

### Beschreibung bevorzugter Ausführungsformen

Gleiche Bezugszeichen in den Figuren deuten auf gleiche oder analoge Elemente hin.

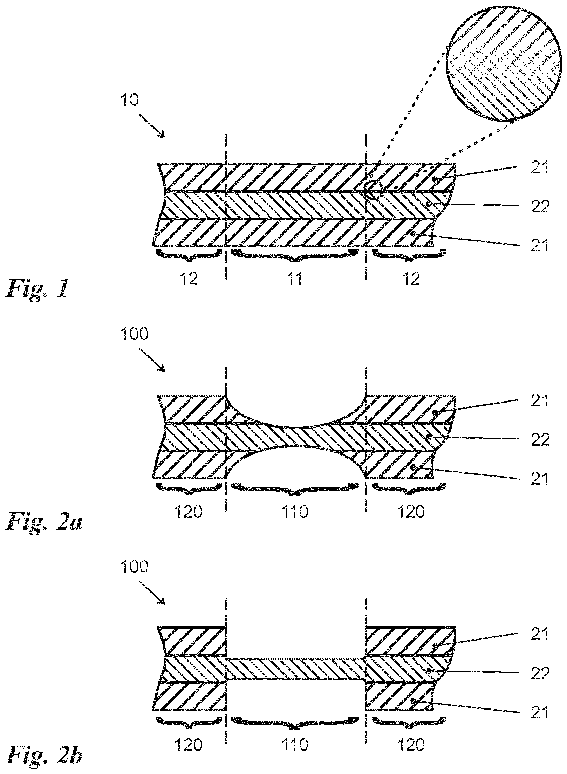

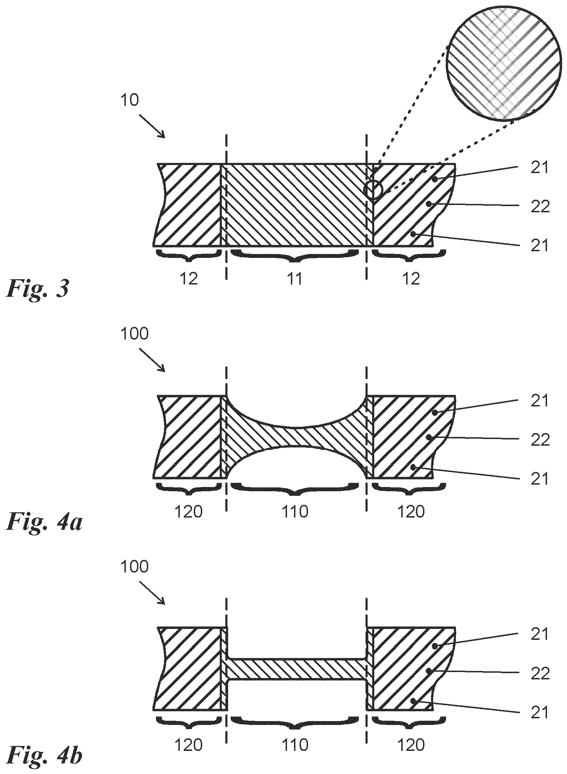

Im Rahmen des erfindungsgemäßen Herstellungsverfahrens wird zunächst ein Wägesystem-Rohling 10 mittels eines additiven Herstellungsverfahrens erzeugt. Dabei werden unterschiedliche Materialien bzw. unterschiedliche Materialkombinationen für unterschiedliche Bereiche des Wägesystem-Rohlings 10 verwendet. Im Anschluss erfolgt eine subtraktive Endbearbeitung des Wägesystem-Rohlings 10, die in der Erzeugung eines fertigen Wägesystems 100 resultiert. Die Figuren 1 und 3 zeigen in stark schematisierter Darstellung illustrative Ausschnitte von unterschiedlich aufgebauten Wägesystem-Rohlingen 10. Die Figuren 2 und 4 zeigen die mit unterschiedlichen Endbearbeitungstechniken aus den Wägesystem-Rohlingen 10 der Figuren 1 und 3 erzeugbare Wägesysteme 100. Dargestellt ist jeweils ein Ausschnitt des Wägesystem-Rohlings 10 bzw. des Wägesystems 100, der einen prospektiven Dünnstellengelenk-Bereich 11 bzw. ein Dünnstellengelenk 110 sowie die beidseitig jeweils angrenzenden prospektiven Hebel-Bereiche 12 bzw. Hebel 120 umfassen. Von den prospektiven Hebel-Bereichen 12 bzw. den Hebeln 120 ist dabei lediglich der unmittelbar an den prospektiven Dünnstellengelenk-Bereich 11 bzw. das Dünnstellengelenk 110 angrenzende Endbereich dargestellt.

Bei dem Wägesystem-Rohling 10 von Figur 1 wurde ein sandwichartiger Schichtaufbau realisiert. Zwischen zwei äußeren Schichten aus einem ersten Material 21 ist eine innere Schicht aus einem zweiten Material 22 eingebettet. Das erste Material 21, beispielsweise Edelstahl oder eine Kupfer-Nickel-Zink-Legierung, ist so gewählt, dass es für die Ausgestaltung der Hebel 120 des Wägesystems 100 optimiert ist. Insbesondere soll es stabil, kriechfest, kostengünstig und vorzugsweise leicht bearbeitbar sein. Das zweite Material 22, beispielsweise Inconel^{®} oder eine Kupfer-Beryllium-Legierung, ist hingegen so gewählt, dass es für die Ausgestaltung des Dünnstellengelenks 110 optimiert ist. Insbesondere haben hier die im Einzelfall jeweils gewünschten Federeigenschaften oberste Priorität bei der Materialwahl. Der Fachmann wird verstehen, dass Figur 1 gerade im Hinblick auf die relative Schichtdicke der Materialien 21, 22 keinesfalls maßstäblich zu verstehen ist. Insbesondere werden in der Praxis die äußeren Schichten aus dem ersten Material 21 in der Regel deutlich dicker sein als die innere Schicht aus dem zweiten Material 22.

Der oben rechts in Figur 1 dargestellte Vergrößerungskreis illustriert eine Besonderheit des additiven Herstellungsverfahrens. Durch ein sukzessives Überblenden der für den Aufbau des Wägesystem-Rohlings 10 verwendeten Ausgangspulver aus den Materialien 21, 22 kann zwischen den Schichten ein Übergangsbereich geschaffen werden, in dem sich die Materialien 21, 22 durchdringen und trotz der unterschiedlichen Ausgangsmaterialien eine quasi-materialeinheitliche Struktur bilden. Je nach der gewählten Synchronisation von Pulverzufuhr und Pulverauftrag während der additiven Fertigung können die Dicke und die Materialgradienten in diesem Übergangsbereich präzise eingestellt werden.

Erfindungsgemäß wird der Wägesystem-Rohling 10 sodann einer Endbearbeitung unterzogen, bei der insbesondere die prospektiven Dünnstellengelenk-Bereiche 11 in Dünnstellengelenke 110 umgearbeitet werden. Dies erfolgt erfindungsgemäß mittels eines subtraktiven Bearbeitungsverfahrens, d.h. durch Materialabtrag. Auch die prospektiven Hebel-Bereiche 12 erfahren eine Umarbeitung zu den Hebeln 120.

Die Endbearbeitung kann auf unterschiedliche Weisen erfolgen. Figur 2a zeigt das Ergebnis einer typischen Endbearbeitung durch Fräsen. Figur 2b zeigt das Ergebnis einer typischen laseroptischen Endbearbeitung. Auch andere subtraktive Bearbeitungsverfahren, wie beispielsweise das Elektroerodieren, sind im Rahmen der vorliegenden Erfindung einsetzbar.

Figur 3 zeigt eine alternative Ausführungsform eines Wägesystem-Rohlings 10. Bei der additiven Herstellung des Wägesystem-Rohlings 10 von Figur 3 wurden die unterschiedlichen Materialien 21, 22 nicht schicht-, sondern abschnittsweise abwechselnd aufgetragen. Auch hier ergibt sich, wie im Vergrößerungskreis rechts oben in Figur 3 dargestellt, ein quasi-materialeinheitlicher Übergang, der eine feste Verankerung der unterschiedlichen Materialbereiche ineinander gewährleistet. Bei der Ausführungsform von Figur 3 wurden die prospektiven Hebel-Bereiche 12 nahezu vollständig aus dem ersten Material 21 und der prospektiven Dünnstellengelenk-Bereich 11 vollständig aus dem zweiten Material 22 gefertigt. Bei der dargestellten, bevorzugten Ausführungsform wurde allerdings der Übergangsbereich zwischen den Materialien 21, 22 deutlich in die prospektiven Hebel-Bereiche 12 versetzt. Dies hat zur Folge, dass der prospektive Dünnstellengelenk-Bereich 11 tatsächlich ausschließlich aus dem für die Gelenkfunktion optimierten zweiten Material 22 besteht. Die durch den Übergangsbereich repräsentierte "Unreinheit" im Material, die sich, sofern im fertigen Dünnstellengelenk 110 positioniert, nachteilig auf die Gelenkfunktion auswirken könnte, fällt im Bereich der Hebel 120, die im Wesentlichen stabil, insbesondere biegesteif sein müssen, nicht ins Gewicht.

Bezüglich Figur 4, die unterschiedliche Varianten der erfindungsgemäßen Endbearbeitung darstellt, nämlich insbesondere einer Endbearbeitung durch Fräsen (Teilfigur 4a) und einer laseroptischen Endbearbeitung (Teilfigur 4b) kann vollumfänglich auf das oben im Kontext von Figur 2 gesagte verwiesen werden.

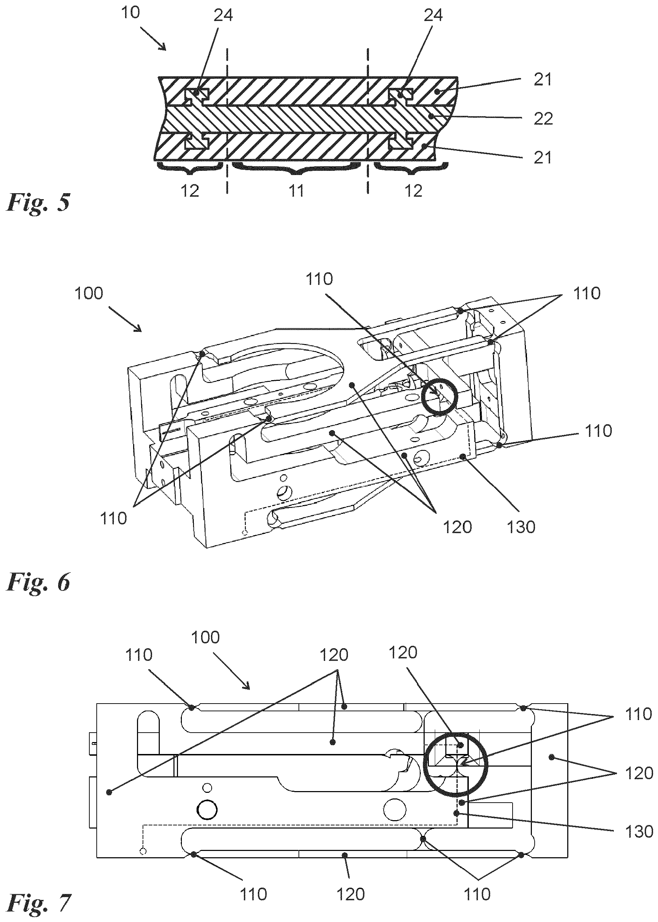

Figur 5 zeigt eine zur oben erläuterten Verankerung der Materialschichten durch kontinuierliche Materialübergänge alternative Ausführungsform eines erfindungsgemäßen Wägesystem-Rohlings 10. Hier sind die Grenzbereiche zwischen den Schichten ersten Materials 21 und zweiten Materials 22 als scharfe Trennflächen gestaltet, wobei die innere Schicht zweiten Materials 22 pilzartig hinterschnittene Verankerungen 24 aufweist, die in die benachbarten Schichten hinein ragen und dort formschlüssig von erstem Material 21 umgriffen sind. Derartige Verankerungen 24 können über die gesamte Grenzfläche verteilt vorgesehen sein, um eine dauerhaft feste Verbindung zwischen den einzelnen Materialschichten zu gewährleisten.

Die Figuren Figur 6 und 7 zeigen unterschiedliche Darstellungen einer Weiterbildung der vorliegenden Erfindung, bei der die an das durch einen fett gezeichneten Kreis gekennzeichnete Dünnstellengelenk 110 angrenzenden Hebel 120 im Wesentlichen aus keramischem Material gefertigt sind. Sie weisen allerdings eine sie durchziehende Bahn aus metallischem Material auf, aus welchem auch das Dünnstellengelenk 110 im Wesentlichen besteht. Auf diese Weise wird eine sich quasi beliebig durch das Wägesystem erstreckende Leiterbahn 130 (gestrichelt in Figur 6) realisiert, die zur (zumindest im Bereich der Hebel 120) isolierten Leitung von Mess- oder Steuerströmen oder zur Energieversorgung bestimmter Komponenten genutzt werden kann.

Natürlich stellen die in der speziellen Beschreibung diskutierten und in den Figuren gezeigten Ausführungsformen nur illustrative Ausführungsbeispiele der vorliegenden Erfindung dar. Dem Fachmann ist im Lichte der hiesigen Offenbarung ein breites Spektrum von Variationsmöglichkeiten an die Hand gegeben. Insbesondere ist die Erfindung nicht auf den Einsatz von genau zwei unterschiedlichen Materialen 21, 22 beschränkt. Es können selbstverständlich auch 3 oder mehr unterschiedliche Materialien in unterschiedlichen räumlichen Konstellationen Einsatz finden. Auch ist die Erfindung nicht auf die Verwendung metallischer Materialien beschränkt. Insbesondere die Verwendung von Keramiken, speziell für die prospektiven Hebel-Bereiche 12 bzw. die Hebel 120, hat sich bewährt. Auch wird der Fachmann verstehen, dass unterschiedliche Bereiche ein und desselben Wägesystem-Rohlings 10 auf unterschiedliche Weisen, beispielsweise gemäß den Ausführungsbeispielen der Figuren 1 und 3, ausgebildet sein können, sodass in ein und demselben Wägesystem 100 unterschiedliche Dünnstellengelenke 110 bzw. an sie angrenzende Hebel 120 realisiert sein können.

### Bezugszeichenliste

- 10: Wägesystem-Rohling
- 11: Dünnstellengelenk-Bereich
- 12: Hebel-Bereich
- 21: erstes Material
- 22: zweites Material
- 100: Wägesystem
- 110: Dünnstellengelenk
- 120: Hebel

## Patentansprüche

1. Monolithisches Wägesystem (100),
umfassend eine Mehrzahl von Hebeln (120), die mittels Dünnstellengelenken (110) miteinander verbunden sind, wobei die Hebel (120) einerseits und die Dünnstellengelenke (110) andererseits aus unterschiedlichen Materialien oder Materialkombinationen bestehen und die beidseitig an eines der Dünnstellengelenke (110) angrenzenden Hebel (120) ein erstes Material (21) aufweisen und das Dünnstellengelenk (110) ein vom ersten Material (21) verschiedenes, zweites Material (22) aufweist,
**erhalten durch**
- ein additives Fertigungsverfahren, bei dem unterschiedliche Materialien, einschließlich besagten ersten und zweiten Materials (21, 22), schichtweise aufgetragen und zu einem einstückigen Wägesystem-Rohling (10) verbunden werden, wobei der Wägesystem-Rohling (10) prospektive Hebel-Bereiche (12) und prospektive Dünnstellengelenk-Bereiche (11) aufweist, sowie
- eine nachfolgende, subtraktive Endbearbeitung des Wägesystem-Rohlings (10) zumindest an den prospektiven Dünnstellengelenk-Bereichen (11) zum Erhalt des Wägesystems (100).

2. Monolithisches Wägesystem (100) nach Anspruch 1,
**dadurch gekennzeichnet,**
**dass** die subtraktive Endbearbeitung mechanisch, insbesondere durch Fräsen erfolgt.

3. Monolithisches Wägesystem (100) nach einem der vorangehenden Ansprüche,
**dadurch gekennzeichnet,**
**dass** die subtraktive Endbearbeitung laseroptisch erfolgt.

4. Monolithisches Wägesystem (100) nach einem der vorangehenden Ansprüche,
**dadurch gekennzeichnet,**
**dass** die subtraktive Endbearbeitung durch Elektroerodieren erfolgt.

5. Monolithisches Wägesystem (100) nach einem der vorangehenden Ansprüche,
**dadurch gekennzeichnet,**
**dass** einer der prospektiven Dünnstellengelenk-Bereiche (11) sowie die beidseitig an ihn angrenzenden prospektiven Hebel-Bereiche (12) zwei äußere Schichten des ersten Materials (21) und eine dazwischen liegende, innere Schicht des zweiten Materials (22) aufweisen und im Rahmen der Endbearbeitung die äußeren Schichten im prospektiven Dünnstellengelenk-Bereich (11) unter wenigstens teilweiser Erhaltung der dortigen inneren Schicht sowie unter wenigstens teilweiser Erhaltung der inneren und äußeren Schichten in den angrenzenden prospektiven Hebel-Bereichen (12) vollständig entfernt werden.

6. Monolithisches Wägesystem (100) nach einem der vorangehenden Ansprüche,
**dadurch gekennzeichnet,**
**dass** die beidseitig an ein Dünnstellengelenk (110) angrenzenden Hebel (120) hauptsächlich aus dem ersten Material (21) bestehen und das Dünnstellengelenk (110) vollständig aus dem zweiten Material (22) besteht, welches in innerhalb der Hebel (120) liegenden Übergangsbereichen graduell in das erste Material (21) übergeht.

7. Monolithisches Wägesystem (100) nach einem der vorangehenden Ansprüche,
**dadurch gekennzeichnet,**
**dass** das erste und das zweite Material (21, 22) metallische Materialien sind, wobei das erste Material (21) insbesondere Edelstahl und das zweite Material (22) insbesondere eine korrosionsbeständige Nickelbasislegierung ist oder wobei das erste Material (21) insbesondere eine Kupfer-Nickel-Zinn-Legierung ist und das zweite Material (22) insbesondere eine Kupfer-Beryllium-Legierung ist.

8. Monolithisches Wägesystem (100) nach einem der Ansprüche 1 bis 6,
**dadurch gekennzeichnet,**
**dass** das erste Material (21) eine Keramik, insbesondere Zirkonoxid oder Aluminiumoxid, ist und das zweite Material (22) ein metallisches Material ist.

9. Monolithisches Wägesystem nach Anspruch 8,
**dadurch gekennzeichnet,**
**dass** die beidseitig an eines der Dünnstellengelenke angrenzenden Hebel eine sie durchziehende, mit dem zweiten Material des Dünnstellengelenks materialeinheitlich verbundene, von dem ersten Material umgebene, elektrische Leiterbahn aus dem zweiten Material enthalten.

10. Verfahren zum Herstellen eines monolithischen Wägesystems (100), umfassend eine Mehrzahl von Hebeln (120), die mittels Dünnstellengelenken (110) miteinander verbunden sind, wobei die Hebel (120) einerseits und die Dünnstellengelenke (110) andererseits aus unterschiedlichen Materialien oder Materialkombinationen bestehen und die beidseitig an eines der Dünnstellengelenke (110) angrenzenden Hebel (120) ein erstes Material (21) aufweisen und das Dünnstellengelenk (110) ein vom ersten Material (21) verschiedenes, zweites Material (22) aufweist,
**gekennzeichnet durch**
die Schritte:
- Herstellen eines Wägesystem-Rohlings (10) mittels eines additiven Fertigungsverfahrens, bei dem Pulver aus unterschiedlichen Materialien, einschließlich besagten ersten und zweiten Materials (21, 22), zu dem Wägesystem-Rohling (10) gesintert werden, wobei der Wägesystem-Rohling (10) prospektive Hebel-Bereiche (12) und prospektive Dünnstellengelenk-Bereiche (11) aufweist, sowie
- nachfolgendes, subtraktives Endbearbeiten des Wägesystem-Rohlings (10) zumindest an den prospektiven Dünnstellengelenk-Bereichen (110) zur Fertigstellung des Wägesystems.

## Claims

1. Monolithic weighing system (100),
comprising a plurality of levers (120), which are joined together by thin-section joints (110), wherein the levers (120), on the one hand, and the thin-section joints (110), on the other hand, are made of different materials or of different material combinations, and the levers (120) adjoining one of the thin-section joints (110) on both sides thereof comprise a first material (21), and the thin-section joint (110) comprises a second material (22), which is different from the first material (21),
produced by
- an additive manufacturing method, in which different materials, including said first and second materials (21, 22), are applied in layers and are joined to form a single-piece weighing system blank (10), wherein the weighing system blank (10) has prospective lever regions (12) and prospective thin-section joint regions (11), and
- a subsequent subtractive finishing of the weighing system blank (10) at least on the prospective thin-section joint regions (11), to produce the weighing system (100).

2. Monolithic weighing system (100) according to claim 1,
**characterized**
**in that** the subtractive finishing is carried out mechanically, in particular by milling.

3. Monolithic weighing system (100) according to any one of the preceding claims,
**characterized**
**in that** the subtractive finishing is carried out laser-optically.

4. Monolithic weighing system (100) according to any one of the preceding claims,
**characterized**
**in that** the subtractive finishing is carried out by electrical discharge machining.

5. Monolithic weighing system (100) according to any one of the preceding claims,
**characterized**
**in that** one of the prospective thin-section joint regions (11) and the prospective lever regions (12) adjoining the prospective thin-section joint region on both sides thereof, have two outer layers of the first material (21) and, lying therebetween, an inner layer of the second material (22), and, during the final machining process, the outer layers in the prospective thin-section joint region (11) are completely removed while the inner layer is at least partially retained in the prospective thin-section joint region, and both the inner and the outer layers are at least partially retained in the adjoining prospective lever regions (12).

6. Monolithic weighing system (100) according to any one of the preceding claims,
**characterized**
**in that** the levers (120) adjoining a thin-section joint (110) on both sides thereof consist mainly of the first material (21), and the thin-section joint (110) consists entirely of the second material (22), which gradually merges into the first material (21) in transition regions, lying within the levers (120) .

7. Monolithic weighing system (100) according to any one of the preceding claims,
**characterized**
**in that** the first and the second material (21, 22) are metallic materials,
wherein the first material (21) is in particular stainless steel, and the second material (22) is in particular a corrosion-resistant nickel-based alloy,
or wherein the first material (21) is in particular a copper-nickel-tin alloy, and the second material (22) is in particular a copper-beryllium alloy.

8. Monolithic weighing system (100) according to any one of claims 1 to 6,
**characterized**
**in that** the first material (21) is a ceramic, in particular zirconium oxide or aluminum oxide, and the second material (22) is a metallic material.

9. Monolithic weighing system according to claim 8,
**characterized**
**in that** the levers, adjoining one of the thin-section joints on both sides thereof, comprise an electrical conductor track made of the second material, which conductor track passes through the levers, is connected to the second material of the thin-section joint in a material uniform manner, and is surrounded by the first material.

10. Method for producing a monolithic weighing system (100),
comprising a plurality of levers (120), which are joined together by thin-section joints (110), wherein the levers (120), on the one hand, and the thin-section joints (110), on the other hand, are made of different materials or of different material combinations, and the levers (120), adjoining one of the thin-section joints (110) on both sides thereof, comprise a first material (21), and the thin-section joint (110) comprises a second material (22), which is different from the first material (21),
**characterized by**
the steps:
- producing a weighing system blank (10) by an additive manufacturing process, in which powders, consisting of different materials, including said first and second materials (21, 22), are sintered to form the weighing system blank (10), wherein the weighing system blank (10) has prospective lever regions (12) and prospective thin-section joint regions (11), and
- subsequently performing a subtractive finishing of the weighing system blank (10) at least on the prospective thin-section joint regions (110) to complete the weighing system.

## Revendications

1. Système de pesage (100) monolithique,
comprenant une pluralité de leviers (120) qui sont reliés les uns aux autres au moyen d'articulations d'emplacement mince (110), dans lequel les leviers (120) d'un côté et les articulations d'emplacement mince (110) de l'autre sont composés de différent(e)s matériaux ou combinaisons de matériaux, et les leviers (120) avoisinant sur les deux côtés l'une des articulations d'emplacement mince (110) présentent un premier matériau (21) et l'articulation d'emplacement mince (110) présente un second matériau (22) différent du premier matériau (21),
obtenu par
- un procédé de fabrication additif par lequel différents matériaux, y compris lesdits premier et second matériaux (21, 22), sont appliqués par couches et reliés pour constituer un flan de système de pesage (10) d'une seule pièce, dans lequel le flan de système de pesage (10) présente des régions de levier (12) prospectives et des régions d'articulation d'emplacement mince (11) prospectives, ainsi que
- une finition soustractive subséquente du flan de système de pesage (10) au moins au niveau des régions d'articulation d'emplacement mince (11) prospectives pour l'obtention du système de pesage (100).

2. Système de pesage (100) monolithique selon la revendication 1,
**caractérisé en ce que**
la finition soustractive s'effectue mécaniquement, en particulier par fraisage.

3. Système de pesage (100) monolithique selon l'une des revendications précédentes,
**caractérisé en ce que**
la finition soustractive s'effectue par optique laser.

4. Système de pesage (100) monolithique selon l'une des revendications précédentes,
**caractérisé en ce que**
la finition soustractive s'effectue par électroérosion.

5. Système de pesage (100) monolithique selon l'une des revendications précédentes,
**caractérisé en ce que**
l'une des régions d'articulation d'emplacement mince (11) prospectives ainsi que les régions de levier (12) prospectives les avoisinant sur les deux côtés présentent deux couches extérieures du premier matériau (21) et une couche intérieure se situant entre celles-ci du second matériau (22) et, dans le cadre de la finition, les couches extérieures dans la région d'articulation d'emplacement mince (11) prospective sont complètement éliminées en préservant au moins partiellement la couche intérieure locale ainsi qu'en préservant au moins partiellement les couches intérieures et extérieures dans les régions de levier (12) prospectives avoisinantes.

6. Système de pesage (100) monolithique selon l'une des revendications précédentes,
**caractérisé en ce que**
les leviers (120) avoisinant sur les deux côtés une articulation d'emplacement mince (110) sont principalement composés du premier matériau (21) et l'articulation d'emplacement mince (110) est complètement composée du second matériau (22), lequel passe graduellement dans le premier matériau (21) dans des régions de transition se situant à l'intérieur des leviers (120).

7. Système de pesage (100) monolithique selon l'une des revendications précédentes,
**caractérisé en ce que**
le premier et le second matériau (21, 22) sont des matériaux métalliques,
dans lequel le premier matériau (21) est en particulier un acier inoxydable et le second matériau (22) est en particulier un alliage à base de nickel résistant à la corrosion
ou dans lequel le premier matériau (21) est en particulier un alliage cuivre-nickel-étain et le second matériau (22) est en particulier un alliage nickel-béryllium.

8. Système de pesage (100) monolithique selon l'une des revendications 1 à 6,
**caractérisé en ce que**
le premier matériau (21) est une céramique, en particulier un oxyde de zirconium ou un oxyde d'aluminium, et le second matériau (22) est un matériau métallique.

9. Système de pesage monolithique selon la revendication 8,
**caractérisé en ce que**
les leviers avoisinant sur les deux côtés l'une des articulations d'emplacement mince contiennent une piste conductrice électrique s'étirant dans le second matériau, reliée dans un même matériau au second matériau de l'articulation d'emplacement mince, entourée du premier matériau.

10. Procédé de fabrication d'un système de pesage (100) monolithique,
comprenant une pluralité de leviers (120) qui sont reliés les uns aux autres au moyen d'articulations d'emplacement mince (110), dans lequel les leviers (120) d'un côté et les articulations d'emplacement mince (110) de l'autre sont composés de différent(e)s matériaux ou combinaisons de matériaux, et les leviers (120) avoisinant sur les deux côtés l'une des articulations d'emplacement mince (110) présentent un premier matériau (21) et l'articulation d'emplacement mince (110) présente un second matériau (22) différent du premier matériau (21),
**caractérisé par**
les étapes :
- fabrication d'un flan de système de pesage (10) au moyen d'un procédé de fabrication additif par lequel des poudres dans différents matériaux, y compris lesdits premier et second matériaux (21, 22), sont frittées pour constituer le flan de système de pesage (10), dans lequel le flan de système de pesage (10) présente des régions de levier (12) prospectives et des régions d'articulation d'emplacement mince (11) prospectives, ainsi que
- finition soustractive subséquente du flan de système de pesage (10) au moins au niveau des régions d'articulation d'emplacement mince (110) prospectives pour la finalisation du système de pesage.
